# EUROPÄISCHE PATENTSCHRIFT

(11) **EP 4 392 268 B1**
(45) Veröffentlichungstag und Bekanntmachung des Hinweises auf die Patenterteilung: **12.11.2025**
(21) Anmeldenummer: 21790368.1
(22) Anmeldetag: 27.08.2021
(51) Int. Cl.: B60C 11/03, B60C 11/12

(54) **NUTZFAHRZEUGREIFEN**
COMMERCIAL VEHICLE TYRE
PNEU DE VÉHICULE UTILITAIRE

(43) Veröffentlichungstag der Anmeldung: 03.07.2024
(73) Patentinhaber: Continental Reifen Deutschland GmbH, 30175 Hannover (DE)
(72) Erfinder: SCHWENKE, Andreas, 30419 Hannover (DE); KRISTEN, Florian, 30419 Hannover (DE); ROTHER, Helge, 30419 Hannover (DE); YEO, Chun Yi, 30419 Hannover (DE)
(74) Vertreter: Continental Corporation
(86) Internationale Anmeldenummer: PCT/DE2021/200115
(87) Internationale Veröffentlichungsnummer: WO 2023/025336

(56) Entgegenhaltungen:
- EP-A1- 1 529 662
- EP-B1- 2 159 080
- DE-A1- 102019 211 025
- DE-A1- 3 540 668

## Beschreibung

Die Erfindung betrifft einen Nutzfahrzeugreifen mit einem Laufstreifen mit zumindest einer in Umfangsrichtung umlaufenden, seitlich der Reifenäquatorialebene angeordneten Profilrippe mit durchquerenden Einschnitten, welche jeweils Einschnittwände, eine zu den Einschnittwänden übereinstimmend beabstandete Einschnittmittelfläche, eine Breite von 0,4 mm bis 2,0 mm und in radialer Richtung eine maximale Tiefe von zumindest 40% der Profiltiefe aufweisen, wobei jeder Einschnitt zumindest in einem in Draufsicht über seinen Großteil verlaufenden Abschnitt zumindest eine gegenüber der radial äußeren Einschnittperipherie abgesetzte, in Erstreckungsrichtung des Einschnittes in einer Wellenform und in radialer Richtung bogenförmig oder einzackig verlaufende Einschnittzone aufweist, wobei eine durch die Stelle der maximalen Auslenkung der Einschnittzone verlaufende Fläche mit der Einschnittmittelfläche eine der Wellenform der Einschnittzone folgende Schnittlinie aufweist.

Ein derartiger Nutzfahrzeugreifen ist beispielsweise aus der WO 2021/099032 A1 bekannt. Dieser Reifen weist einen Laufstreifen mit einer laufrichtungsgebunden ausgeführten Profilierung sowie mit mittleren und schulterseitigen Profilrippen auf. Zumindest eine mittlere Profilrippe ist mit durchquerenden Einschnitten mit einer Breite von 0,5 mm bis 1,2 mm versehen, welche sich in Draufsicht jeweils aus einem zentralen Abschnitt und zwei seitlichen Abschnitten zusammensetzen. Die Einschnitte verlaufen in Draufsicht bogenförmig und bezüglich der Mittellinie der Profilrippe symmetrisch und weisen eine einheitliche in radialer Richtung verlaufende Wellenform auf, welche lediglich im zentralen Abschnitt von der in der Erstreckungsrichtung der Einschnitte vorliegenden Wellenform überlagert ist. Es sind daher mehrere in radialer Richtung aufeinanderfolgende, im Querschnitt jedes Einschnittes, bogenförmig oder einzackig verlaufende Einschnittzonen vorhanden. Ferner weist jeder Einschnitt einen radial äußeren Einschnittabschnitt auf, welcher von der Einschnittperipherie ausgeht und in radialer Richtung verläuft. Die Einschnitte ermöglichen insbesondere eine stabilisierende gegenseitige Abstützung der durch die Einschnitte gebildeten Rippenelemente unter Belastung sowie einen geringen und gleichmäßigen Laufstreifenabrieb.

Aus der DE 10 2019 211 025 A1 ist ein Fahrzeugluftreifen bekannt, welcher insbesondere ein PKW-, Van- oder Light-Truck-Reifen ist und welcher einen Laufstreifen mit zumindest einer schulterseitigen Profilrippe mit durch Querrillen voneinander getrennten Profilblöcken aufweist. Die Profilblöcke sind mit Einschnitten versehen, welche, in Draufsicht betrachtet, über drei Einschnittteile verlaufen, von welchen einer einem zumindest Großteils außerhalb der Bodenaufstandsfläche befindlichen, schulterseitigen Profilrippenabschnitt, einer einem mittleren Profilrippenabschnitt und einer einem laufstreifeninnenseitigen Profilrippenabschnitt zugeordnet ist. In jedem Einschnittteil weicht die Tiefe der Einschnitte und die Gestaltung der Einschnittwände von der Tiefe der Einschnitte und der Gestaltung der Einschnittwände in den beiden anderen Einschnittteilen derart ab, dass die laterale Steifigkeit der schulterseitigen Profilrippe vom schulterseitigen Profilrippenabschnitt zum laufstreifeninnenseitigen Profilrippenabschnitt abnimmt. Gemäß einer Ausführungsform weist der Einschnittteil, welcher dem schulterseitigen Profilrippenabschnitt zugeordnet ist, im Querschnitt betrachtet, einen kreisbogenförmig verlaufenden, mittleren Abschnitt auf. Solche Einschnitte sollen zu einer guten Balance zwischen der Winterperformance und den Handlingeigenschaften auf trockener Fahrbahn beitragen.

Die EP 1 529 662 A1 offenbart einen Fahrzeugluftreifen mit einem Laufstreifen mit Profilpositiven, welche mit in Draufsicht im Wesentlichen in axialer Richtung sowie wellenförmig verlaufenden Einschnitten versehen sind, wobei die Amplitude der Wellenform der Einschnitte in einer der Erstreckungsrichtungen der Einschnitte zunimmt. Die Einschnitte sollen bei einwirkenden Querkräften die Profilpositive versteifen und unter Aufrechterhaltung guter Griffeigenschaften die Handlingeigenschaften verbessern.

In Profilrippen ausgebildete, durchquerende Einschnitte tragen bekannter Weise zur Verbesserung der Griffeigenschaften des Reifens bei. Ferner verringern durchquerende Einschnitte die Steifigkeit der jeweiligen Profilrippe, wodurch vorteilhafter Weise die Beweglichkeit der Profilrippe etwas zunimmt. Durch die lokal verringerte Steifigkeit besteht die Gefahr eines ungleichmäßigen Abriebbildes, insbesondere bei Nutzfahrzeugreifen, welche auf der Antriebssachse montiert sind. Durch die bisher bekannten Einschnitte mit gewellten Einschnittzonen konnte der Laufstreifenabrieb vergleichmäßigt werden. Insbesondere auf Antriebsachsen montierte Nutzfahrzeugreifen sind jedoch weiterhin anfällig für das Auftreten einen eines ungleichmäßigen Abriebbildes.

Der Erfindung liegt daher die Aufgabe zugrunde, bei einem Nutzfahrzeugreifen der eingangs genannten Art das Abriebbild weiter zu verbessern.

Gelöst wird die gestellte Aufgabe erfindungsgemäß dadurch, dass der Einschnitt ausschließlich in der Einschnittzone in der Wellenform verläuft, wobei die Amplitude der der Wellenform der Einschnittzone folgenden Schnittlinie in jedem über eine halbe Wellenlänge verlaufenden Schnittlinienabschnitt in Richtung laufstreifenaußenseitiges Einschnittende abnimmt.

Durch die speziell gewellte Einschnittzone mit insgesamt abnehmender Amplitude in Richtung laufstreifenaußenseitigem Einschnittende nimmt das Ausmaß des gegenseitigen Abstützungseffektes zwischen den durch die Einschnitte gebildeten Rippenelementen in Richtung Laufstreifenschulter ab. Weiter laufstreifenaußenseitig liegende Umfangsabschnitte der Profilrippe werden durch die gewellte Einschnittzone - gegenüber weiter laufstreifeninnenseitig liegenden Umfangsabschnitten - weniger stark gegeneinander versteift. In schulterseitigen Profilrippen werden daher die näher zur Laufstreifenschulter befindlichen, bedingt durch die Reifenkontur weniger Gummimaterial aufweisenden Umfangsabschnitte gegenüber näher zur Reifenäquatorialebene liegenden Umfangsabschnitten weniger stark versteift, wodurch schulterseitige Profilrippen mit derartigen Einschnitten besonders gleichmäßig abreiben. Analoges gilt für insbesondere seitlich der Reifenäquatorialebene angeordnete, mittlere Profilrippen, wobei die speziell gewellte Einschnittzone insbesondere dem variierenden "Footprint-Druck" entgegenwirkt, wodurch auch diese Profilrippen besonders gleichmäßig abreiben.

Gemäß einer bevorzugten Ausführung weist die Amplitude am laufstreifeninnenseitigen Ende jedes Schnittlinienabschnittes einen ersten Amplitudenwert und am laufstreifenaußenseitigen Ende jedes Schnittlinienabschnittes einen zweiten Amplitudenwert auf, wobei jeder zweite Amplitudenwert das 0,60-Fache bis 0,95-Fache des zugehörigen ersten Amplitudenwertes beträgt. Da die Schnittlinienabschnitte unmittelbar aneinander anschließen, ist der zweite Amplitudenwert eines Schnittlinienabschnittes gleichzeitig der erste Amplitudenwert jenes Schnittlinienabschnittes, welcher an das laufstreifenaußenseitige Ende des erstgenannten Schnittlinienabschnittes anschließt. Diese Ausführung spezifiziert somit das Ausmaß der über die Schnittlinienabschnitte vorliegenden, besonders vorteilhaften Amplitudenabnahme.

Im Hinblick auf die für einen gleichmäßigen Abrieb vorteilhafte versteifende Wirkung der gewellten Einschnittzone ist es günstig, wenn die Amplitude am laufstreifeninnenseitigen Ende des am weitesten laufstreifeninnenseitigen Schnittlinienabschnittes einen Amplitudenwert von 100% bis 500%, insbesondere 120% bis 300%, bevorzugt 150% bis 250%, der Breite des Einschnittes aufweist.

Gemäß einer weiteren, für ein gleichmäßiges Abriebverhalten vorteilhaften, bevorzugten Ausführung verläuft die der Wellenform der Einschnittzone folgende Schnittlinie über drei bis sechs, vorzugsweise über bis zu fünf, insbesondere über vier, Wellenlängen. Es sind daher entsprechend viele, jeweils über eine halbe Wellenlänge verlaufende Schnittlinienabschnitt vorhanden, über welche die erwähnte Amplitudenabnahme erfolgt.

Bei der letztgenannten bevorzugten Ausführung besteht eine vorteilhafte Variante darin, dass die Wellenlängen übereinstimmende Größen aufweisen.

Bevorzugter Weise verläuft die Fläche, welche durch die Stelle der maximalen Auslenkung der Einschnittzone verläuft, parallel zur Rippenaußenfläche der Profilrippe. Die gegenüber der Rippenaußenfläche ermittelte "radiale Tiefenposition" der Einschnittzone ist daher über ihre Längserstreckung konstant.

Dies ermöglicht eine über die in axialer Richtung vorliegende Breitenerstreckung der Profilrippe vorteilhaft gleichmäßige Versteifung, was ebenfalls das Abriebbild vergleichmäßigen hilft.

Eine weitere, ebenfalls für ein gleichmäßiges Abriebverhalten vorteilhaften, bevorzugten Ausführung ist dadurch gekennzeichnet, dass die Fläche, welche durch die Stelle der maximalen Auslenkung der Einschnittzone verläuft, eine Symmetriefläche der Einschnittzone ist.

Gemäß einer weiteren bevorzugten Ausführung verläuft die Fläche, welche durch die Stelle der maximalen Auslenkung der Einschnittzone verläuft, zumindest über den Großteil ihrer Erstreckung in einer in radialer Richtung ermittelten konstanten Tiefe von 45% bis 65%, insbesondere von 50% bis 60%, der maximalen Tiefe des Einschnittes verläuft. Eine derart positionierte Einschnittzone behält bei fortschreitendem Laufstreifenabrieb ihre vorteilhafte Wirkung.

Ferner ist es bevorzugt, wenn die der Wellenform der Einschnittzone folgende Schnittlinie in Form einer Zickzackwelle verläuft.

Eine weitere bevorzugte Ausführung ist dadurch gekennzeichnet, dass die Einschnittzone, im Querschnitt des Einschnittes betrachtet, eine auf die Einschnittmittelfläche bezogene, in radialer Richtung ermittelte Länge von 30% bis 90%, insbesondere von 35% bis 80%, der maximalen Tiefe des Einschnittes aufweist.

Gemäß einer weiteren bevorzugten Ausführung weist der Einschnitt einen zwischen der Einschnittzone und der Einschnittperipherie sowie im Querschnitt des Einschnittes gerade verlaufenden, radial äußeren Einschnittabschnitt mit einer auf die Einschnittmittelfläche bezogenen Länge von vorzugsweise 0,5 mm bis 1,5 mm auf. Die Einschnittzone ist somit entsprechend gegenüber der Einschnittperipherie abgesetzt.

Gemäß einer weiteren bevorzugten Variante weist der Einschnitt einen an die Einschnittzone anschließenden, im Querschnitt des Einschnittes gerade verlaufenden, radial inneren Einschnittabschnitt mit einer auf die Einschnittmittelfläche bezogenen Länge von vorzugsweise 0,5 mm bis 1,5 mm auf.

Eine weitere bevorzugte Ausführung ist dadurch gekennzeichnet, dass zu den Einschnitten Einschnitte gehören,
a) welche von der Rippenaußenfläche der Profilrippe ausgehen und/oder
b) welche sich jeweils in einem zur Profilrippe gehörenden Profilrippensteg befinden, der in einer die Profilrippe durchquerenden Querrille ausgebildet ist, wobei sich der Profilrippensteg über den Großteil der Querrille erstreckt und eine Deckfläche aufweist, welche vorzugsweise gegenüber der Rippenaußenfläche der Profilrippe in einer in radialer Richtung auf ihre tiefste(n) Stelle(n) bezogene Tiefe von 1,0 mm bis 10,0 mm, insbesondere von 2,0 mm bis 5,0 mm, verläuft
   und/oder
c) welche jeweils vom Boden einer Vertiefung, welche die Profilrippe durchquert, ausgehen, wobei die Vertiefung gegenüber der Rippenaußenfläche der Profilrippe in radialer Richtung eine Tiefe von 1,0 mm bis 10,0 mm, vorzugsweise von 2,0 mm bis 4,0 mm, aufweist.

Für die Entwässerung der Profilrippe ist es von Vorteil, wenn Einschnitte vorgesehen sind, welche über ihre gesamte Erstreckung jeweils in einen im Inneren der Profilrippe ausgebildeten Kanal mit einem Durchmesser von 200% bis 600%, insbesondere von 300% bis 500%, bevorzugt von 350% bis 450%, der Breite des Einschnittes einmünden.

Eine besonders günstige Wirkung zeigen die erfindungsgemäß ausgeführten Einschnitte in schulterseitigen Profilrippen, sodass eine weitere bevorzugte Ausführung dadurch gekennzeichnet ist, dass die Profilrippe eine schulterseitige Profilrippe ist.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen Umfangsabschnitt einer schulterseitigen Profilrippe eines Laufstreifens eines Nutzfahrzeugreifens mit einer Ausführungsvariante der Erfindung,
Fig. 2 eine vergrößerte Draufsicht auf das Detail Z₂ der Fig. 1,
Fig. 3 eine Ansicht gemäß der in Fig. 2 durch den Pfeil S₃ angedeuteten Sichtrichtung,
Fig. 4 eine Ansicht gemäß der in Fig. 2 durch den Pfeil S₄ angedeuteten Sichtrichtung,
Fig. 5 eine Visualisierung eines Einschnittes in Schrägansicht,
Fig. 6 eine Visualisierung des Einschnittes aus Fig. 5 in Draufsicht,
Fig. 7 eine Visualisierung des Einschnittes aus Fig. 5 in Draufsicht, wobei der Laufstreifen auf das in Fig. 5 angedeutete Niveau N₇ abgerieben ist,
Fig. 8 einen Schnitt entlang der Linie VIII-VIII der Fig. 6,
Fig. 9 eine Draufsicht auf eine zum Einschnitt aus Fig. 5 bis Fig. 8 gehörende, visualisierte Einschnittmittelfläche und
Fig. 10 eine Schrägansicht der visualisierten Einschnittmittelfläche aus Fig. 9.

Gemäß der Erfindung ausgeführte Nutzfahrzeugreifen sind Reifen für mehrspurige Nutzfahrzeuge, vorzugsweise für mittelschwere LKWs (7,5 t < zGM ≤ 18,0 t) oder für schwere LKWs (zGM > 18,0 t), sowie insbesondere Nutzfahrzeugreifen in Radialbauart. Bevorzugter Weise werden die erfindungsgemäßen Nutzfahrzeugreifen auf der Antriebsachse montiert.

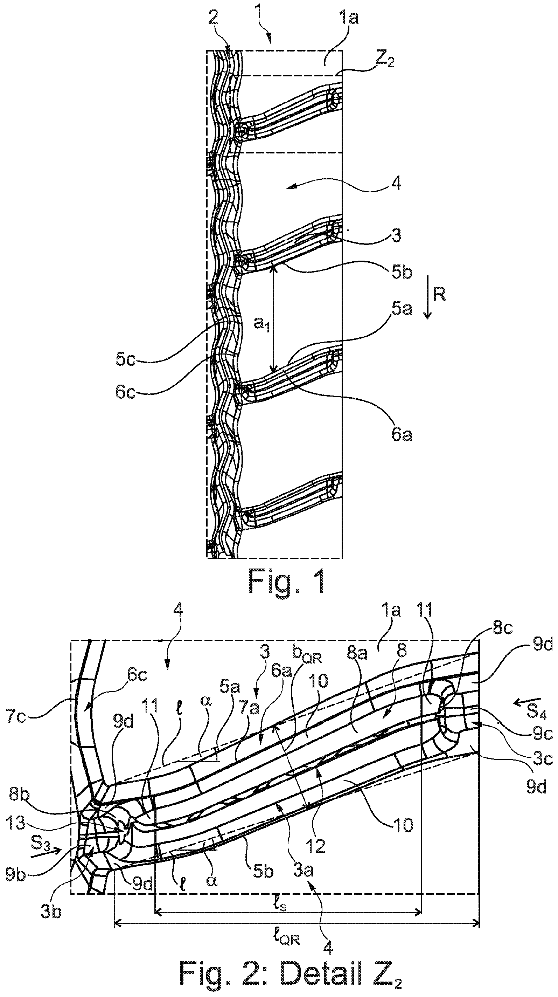

Fig. 1 zeigt eine Draufsicht auf einen Umfangsabschnitt einer schulterseitigen Profilrippe 1 eines Laufstreifen eines Nutzfahrzeugreifens. Bevorzugter Weise ist in der zweiten Laufstreifenschulter eine zweite schulterseitige Profilrippe ausgebildet, welche zur schulterseitigen Profilrippe 1 bezüglich der Reifenäquatorialebene spiegelsymmetrisch ausgeführt ist. Der Laufstreifen weist vorzugsweise eine laufrichtungsgebunden ausgeführte Profilierung auf, wobei er derart an einem Nutzfahrzeug zu montieren ist, dass er die in Fig. 1 durch den Pfeil R angedeutete Abrollrichtung bei Vorwärtsfahrt aufweist.

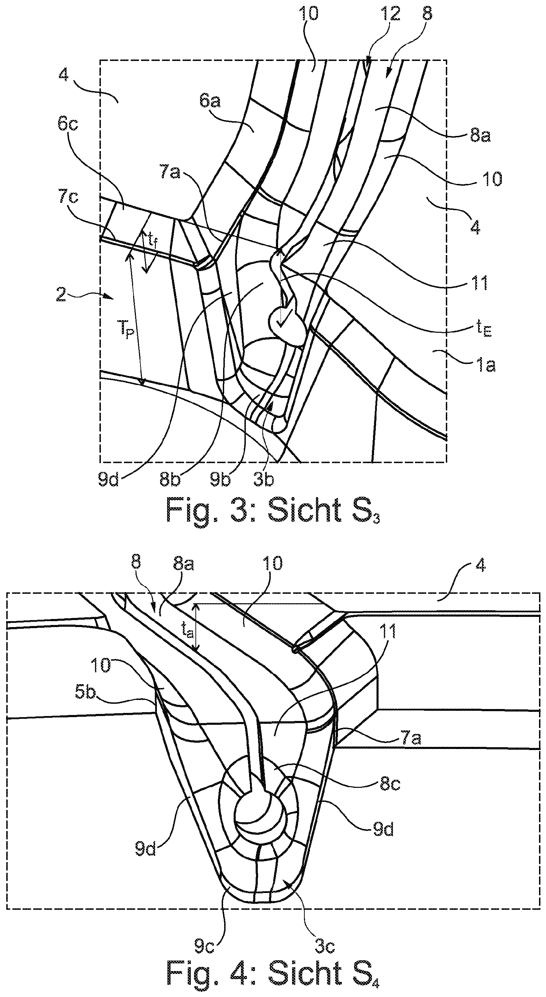

Die schulterseitige Profilrippe 1 ist laufstreifeninnenseitig durch eine beim gezeigten Ausführungsbeispiel in Draufsicht wellenförmig verlaufende, schulterseitige Umfangsrille 2 begrenzt, welche in radialer Richtung auf die jeweils vorgesehene Profiltiefe T_{P} (in Fig. 3 angedeutet) von üblicherweise 12,0 mm bis 26,0 mm ausgeführt ist. Der Ausdruck "Profiltiefe" bezeichnet bei Laufstreifen mit verschieden tief ausgeführten Umfangsrillen die Tiefe der am tiefsten ausgeführten Umfangsrille(n).

Die schulterseitige Profilrippe 1 weist eine in der Laufstreifenperipherie liegende Rippenaußenfläche 1a auf und ist mit einer Vielzahl von über den Laufstreifenumfang verteilten, in Draufsicht parallel zueinander verlaufenden, zur axialen Richtung geneigten schulterseitigen Querrillen 3 versehen, welche die schulterseitige Profilrippe 1 durchqueren und dieser Rippenelemente 4 verleihen. Jedes Rippenelement 4 weist an der Rippenaußenfläche 1a an der einen angrenzenden Querrille 3 eine beim Abrollen des Reifens bei Vorwärtsfahrt (Pfeil R) zuerst in den Untergrund eintretende, einlaufende Kante 5a, an der anderen angrenzenden Querrille 3 eine auslaufende Kante 5b und an der Umfangsrille 2 eine Kante 5c auf. Die Kanten 5a, 5b verlaufen, in Draufsicht betrachtet, im Wesentlichen parallel zueinander, jeweils kaum merkbar S-förmig geschwungen sowie - bezogen auf eine die Enden der jeweiligen Kante 5a, 5b verbindende, in Draufsicht gerade Linie I (Fig. 2) - zur axialen Richtung unter einem Winkel α (Fig. 2) von 10° bis 25°, insbesondere von 13° bis 20°, wobei der Winkel α der Kante 5a vom Winkel α der Kante 5b um höchstens 3°, insbesondere um höchstens 1°, abweicht. In Umfangsrichtung unmittelbar aufeinanderfolgende schulterseitige Querrillen 3 weisen - bezogen auf die Kanten 5a, 5b - in Umfangsrichtung ermittelte gegenseitige Abstände a₁ von vorzugsweise 20,0 mm bis 80,0 mm, insbesondere von 30,0 mm bis 70,0 mm, auf.

Beim gezeigten Ausführungsbeispiel geht von der Kante 5a eine Fase 6a und von der Kante 5c eine Fase 6c aus, wobei die Fasen 6a, 6c, im Querschnitt senkrecht zur zugehörigen Kante 5a, 5c betrachtet, als gerade Linien erscheinen und zur radialen Richtung unter einem Winkel von vorzugsweise 30° bis 55° verlaufen, ferner in radialer Richtung jeweils bis in eine Tiefe t_{f} (Fig. 3) von insbesondere bis zu 3,0 mm reichen und jeweils eine in der Tiefe t_{f} verlaufende Fasenkante 7a (Fase 6a: Fig. 2, Fig. 3), 7c (Fase 6c: Fig. 2, Fig. 3) aufweisen.

Die weitere Ausgestaltung der schulterseitigen Querrillen 3 wird nachfolgend anhand einer einzelnen schulterseitigen Querrille 3 erläutert.

Wie Fig. 2 zeigt, verläuft die schulterseitige Querrille 3, in Draufsicht betrachtet, analog zu den Kanten 5a, 5b kaum merkbar S-förmig geschwungen. Die Querrille 3 weist eine als kleinstmöglichen Abstand zwischen den Kanten 5a, 5b ermittelte Breite b_{QR}, welche 6,0 mm bis 12,0 mm beträgt und über die Erstreckung der Kanten 5a, 5b entweder konstant ist oder um höchstens 2,0 mm variiert, und eine in die axiale Richtung projizierte, auf die Kanten 5a, 5b - bei nicht übereinstimmend langen Kanten 5a, 5b auf die längere der beiden Kanten 5a, 5b - bezogene Länge I_{QR} auf.

In der Querrille 3 ist ein zu den Enden der Querrille 3 beabstandeter, sich über den Großteil der Länge I_{QR} der Querrille 3 erstreckender, bis zu den Rippenelementen 4 reichender und gegenüber den Rippenaußenfläche 1a in radialer Richtung abgesetzter Profilrippensteg 8 (vergl. Fig. 3 und Fig. 4) ausgebildet, sodass sich die Querrille 3, in Draufsicht betrachtet, aus einem auf dem Profilrippensteg 8 verlaufenden, zentralen Rillenhauptabschnitt 3a, einem am laufstreifeninnenseitigen Ende des Profilrippensteges 8 angrenzenden, Rillenmündungsabschnitt 3b und einem am laufstreifenaußenseitigen Ende des Profilrippensteges 8 angrenzenden Rillenschulterabschnitt 3c zusammensetzt.

Der Rillenmündungsabschnitt 3b und der Rillenschulterabschnitt 3c sind, im Querschnitt betrachtet, jeweils durch einen Grund 9b (Rillenmündungsabschnitt 3b, vergl. Fig. 3), 9c (Rillenschulterabschnitt 3c, vergl. Fig. 4) und durch an den Rippenelementen 4 ausgebildete Flanken 9d (vergl. Fig.3 und Fig. 4) begrenzt, wobei jeweils die eine Flanke 9d zur Fasenkante 7a (Fig. 2 bis Fig. 4) und die andere Flanke 9d zur auslaufenden Kante 5b (Fig. 2, Fig. 4) verläuft.

Wie Fig. 2 ferner zeigt, ist der Profilrippensteg 8 in radialer Richtung durch eine parallel zur Rippenaußenfläche 1a verlaufende Deckfläche 8a, zum Rillenmündungsabschnitt 3b durch eine in Richtung zum Grund 9b verlaufende laufstreifeninnenseitige Seitenflanke 8b (vergl. Fig. 3) und zum Rillenschulterabschnitt 3c durch eine in Richtung zum Grund 9c verlaufende laufstreifenaußenseitige Seitenflanke 8c (vergl. Fig. 4) begrenzt. Die Deckfläche 8a verläuft gegenüber der Rippenaußenfläche 1a in einer in radialer Richtung ermittelten, auf ihre tiefste(n) Stelle(n) bezogene Tiefe tₐ (Fig. 4) von 1,0 mm bis 10,0 mm, vorzugsweise von 2,0 mm bis 5,0 mm. Die Seitenflanken 8b, 8c verlaufen in radialer Richtung oder zu dieser unter Winkel von bis zu 3° und sind beim gezeigten Ausführungsbeispiel durchgehend leicht gebogene Flächen, welche die Endbereiche des Profilrippensteges 8 einbuchten und stetig (knickfrei) in die Flanken 9d des Rillenmündungsabschnitt 3b bzw. die Flanken 9d des Rillenschulterabschnittes 3c übergehen (Fig. 2 bis Fig. 4). Ferner ist beim gezeigten Ausführungsbeispiel zwischen der Deckfläche 8a und jedem angrenzenden Rippenelement 4 eine Übergangsrundung 10 (Fig. 2 bis Fig. 4) ausgebildet, welche sich von der laufstreifeninnenseitigen Seitenflanke 8b (Fig. 3) zur laufstreifenaußenseitigen Seitenflanke 8c (Fig. 4) erstreckt und stetig (knickfrei) an diese anschließt. Weitere Übergangsrundungen 11 (Fig. 2 bis Fig. 4) sind zwischen den Enden der Deckfläche 8a und den Seitenflanken 8b, 8c ausgebildet.

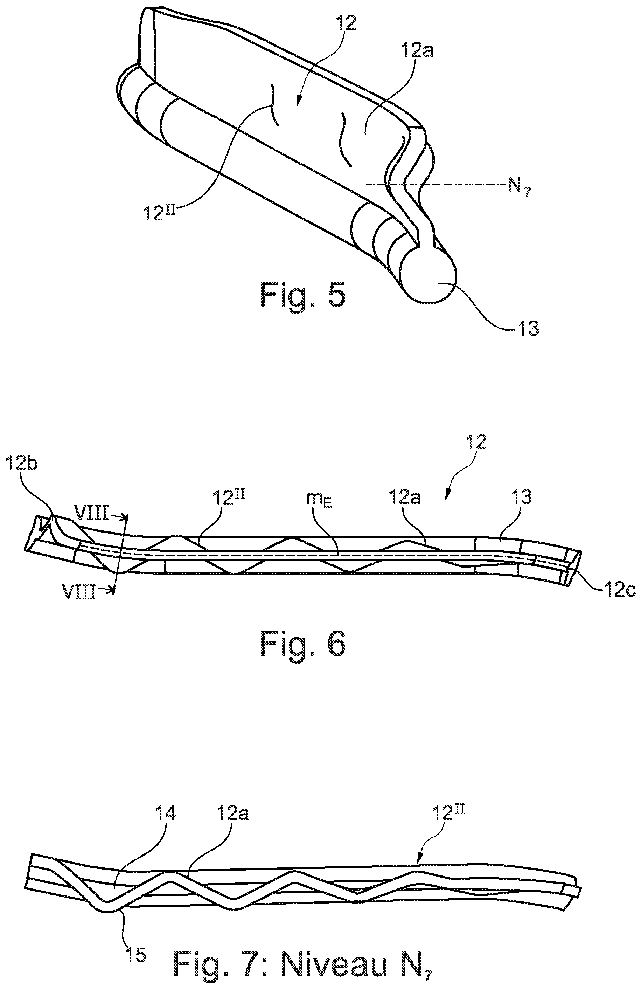

Gemäß Fig. 2 weist der Profilrippensteg 8 - bezogen auf die am weitesten voneinander entfernten Enden seiner Deckfläche 8a - eine in die axiale Richtung projizierte Länge l_{S} von 50% bis 80%, insbesondere von 65% bis 75%, der Länge I_{QR} der Querrille 3 auf und ist mit einem mittig von der Deckfläche 8a ausgehenden, in radialer Richtung ins Innere des Profilrippensteges 8 hineinverlaufenden, den Profilrippensteg 8 in Längserstreckung durchquerenden Einschnitt 12 versehen, welcher beim Ausführungsbeispiel über seine gesamte Erstreckung in einen im Inneren des Profilrippensteges 8 ausgebildeten rohrförmigen Kanal 13 (vergl. Fig. 5) einmündet. Sowohl der Einschnitt 12 als auch der Kanal 13 treten daher an den Seitenflanken 8b, 8c, der Einschnitt 12 ferner an den Übergangsrundungen 11, aus dem Profilrippensteg 8 aus.

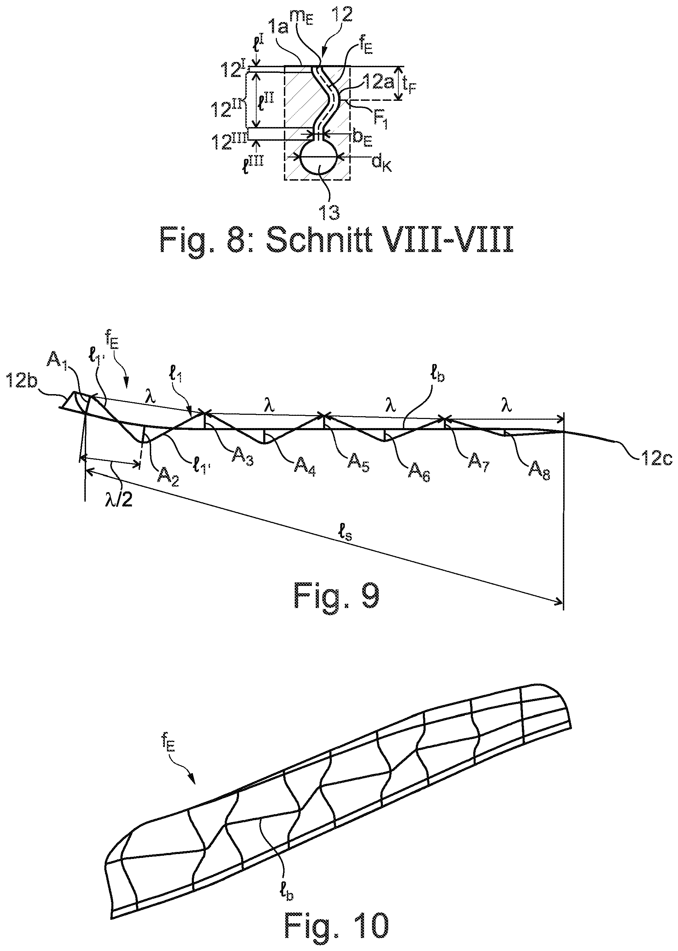

Wie Fig. 5, Fig. 6 und Fig. 8 zeigen, weist der Einschnitt 12 zwei einander gegenüberliegende Einschnittwände 12a und eine zwischen sowie senkrecht zu den Einschnittwänden 12a ermittelte konstante Breite b_{E} (Fig. 8) von 0,4 mm bis 2,0 mm, insbesondere von bis zu 1,2 mm, bevorzugt von bis zu 0,8 mm, auf und reicht über den Großteil seiner Erstreckung in radialer Richtung in eine gegenüber dem Niveau der Rippenaußenfläche 1a ermittelte maximale Tiefe t_{E} (Fig. 3, Tiefe an der tiefsten Stelle) von 40% bis 90%, insbesondere von 50% bis 80%, der Profiltiefe T_{P} (Fig. 3). Der Einschnitt 12 wird in an sich bekannter Weise in Richtung zur Laufstreifenschulter seichter.

Der Einschnitt 12 weist eine in Draufsicht dem an der Deckfläche 8a vorliegenden Einschnittverlauf folgende Einschnittmittellinie m_{E} (Fig. 6), eine von dieser ausgehende, zu den Einschnittwänden 12a übereinstimmend beabstandete Einschnittmittelfläche f_{E} (Fig. 8), ein laufstreifeninnenseitiges Einschnittende 12b (Fig. 6) und ein laufstreifenaußenseitiges Einschnittende 12c (Fig. 6) auf und setzt sich - wie Fig. 8 zeigt - im Querschnitt betrachtet, in radialer Richtung aus einem radial äußeren Einschnittabschnitt 12^{I} (in Fig. 8 kaum erkennbar), einer bogenförmig verlaufenden oder einzackig (also liegend V-förmig) verlaufenden mittleren Einschnittzone 12^{II} und einem radial inneren Einschnittabschnitt 12^{III} zusammen.

Der radial äußere Einschnittabschnitt 12^{I} und der radial innere Einschnittabschnitt 12^{III} verlaufen in radialer Richtung sowie in Fortsetzung zueinander (fluchtend) und weisen eine auf die Einschnittmittelfläche f_{E} bezogene, in radialer Richtung ermittelte Länge I^{I} (Einschnittabschnitt 12^{I}) bzw. Länge I^{III} (Einschnittabschnitt 12^{III}) von vorzugsweise jeweils 0,5 mm bis 1,5 mm auf.

Die mittlere Einschnittzone 12^{II} ist somit gegenüber dem an der Deckfläche 8a vorliegendem Niveau der radial äußeren Einschnittperipherie (Niveau der Einschnittkanten) in radialer Richtung abgesetzt, also ins Innere des Profilrippensteges 8 hineinversetzt. Die mittlere Einschnittzone 12^{II} verläuft in Erstreckungsrichtung des Einschnittes 12 in einer Wellenform (Fig. 6) und weist eine auf die Einschnittmittelfläche f_{E} bezogene, in radialer Richtung ermittelte Länge I^{II} (Fig. 8) von 30% bis 90%, insbesondere von 35% bis 80%, der maximalen Tiefe t_{E} (Fig. 3) auf. Die Länge I^{II} nimmt in Richtung zur Laufstreifenaußenseite - bezogen auf ihren jeweiligen Maximalwert - vorzugsweise um 10% bis 30% ab (vergl. Fig. 10).

Wie Fig. 8 insbesondere in Kombination mit Fig. 5 zeigt, weist die mittlere Einschnittzone 12^{II} ferner eine parallel zur Rippenaußenfläche 1a ausgerichtete Symmetriefläche F₁ auf (in Fig. 5 angedeutet durch das Niveau N₇), welche durch die Stelle der maximalen Auslenkung der mittleren Einschnittzone 12^{II} und zumindest über den Großteil ihrer Erstreckung in einer in radialer Richtung ermittelten konstanten Tiefe t_{F} (Fig. 8) von 45% bis 65%, insbesondere von 50% bis 60%, der maximalen Tiefe t_{E} (Fig. 3) verläuft. Die Stelle der maximalen Auslenkung der mittleren Einschnittzone 12^{II} ist durch jene Stelle der Einschnittmittelfläche f_{E} definiert, welche gegenüber der Einschnittmittellinie m_{E}, betrachtet im in Draufsicht senkrecht zur Einschnittmittellinie m_{E} ausgerichteten Querschnitt, am stärksten ausgelenkt ist.

Fig. 9 und Fig. 10 zeigen jeweils die Einschnittmittelfläche f_{E} des Einschnittes 12. Gemäß Fig. 9 weist die Einschnittmittelfläche f_{E} mit der Symmetriefläche F₁ (Fig. 8) eine in Draufsicht über die erwähnte, in die axiale Richtung projizierte Länge l_{S} (vergl. Fig. 2) des Profilrippensteges 8 in Form einer Zickzackwelle verlaufend Schnittlinie I₁ auf. Die Schnittlinie I₁ folgt somit der Wellenform der mittleren Einschnittzone 12^{II}. Wie Fig. 7 zeigt, ist die mittleren Einschnittzone 12^{II} daher von entsprechend abwechselnd auf den Einschnittwänden 12a ausgebildeten, flach pyramidenförmigen Vorsprüngen 14 mit jeweils einer rechteckigen, insbesondere quadratischen, an der jeweiligen Einschnittwand 12a liegenden Basis (vergl. Visualisierung in Fig. 10) und den Vorsprüngen 14 gegenüberliegenden und mit diesen korrespondierenden Vertiefungen 15 gebildet.

Der Verlauf der Schnittlinie I₁ wird nachfolgend unter Zuhilfenahme einer in der Symmetriefläche F₁ verlaufenden Wellenbasislinie I_{b} (Fig. 9) erläutert. Die Wellenbasislinie I_{b} ergibt sich durch Projektion der Einschnittmittellinie m_{E} (Fig. 6) in die Symmetriefläche F₁ (Fig. 8) und ist jene Linie, bezüglicher welcher in bekannter Weise die Amplitude der Welle ermittelt ist. Gemäß Fig. 9 reicht die wellenförmig verlaufende Schnittlinie I₁ über drei bis sechs, vorzugsweise über bis zu fünf, beim Ausführungsbeispiel über vier, Wellenlängen λ, welche beim Ausführungsbeispiel übereinstimmende Größen aufweisen. Ferner weist die wellenförmig verlaufende Schnittlinie I₁ eine sich verändernde Amplitude auf, welche über jeden über eine halbe Wellenlänge λ/2 verlaufenden Schnittlinienabschnitt I₁' (in Fig. 9 sind zwei von diesen beschriftet) in Richtung laufstreifenaußenseitiges Einschnittende 12c abnimmt. Die Abnahme der Amplitude erfolgt daher jeweils vom näher zum laufstreifeninnenseitigen Einschnittende 12b liegenden, laufstreifeninnenseitigen Ende eines Schnittlinienabschnitt I₁' zum näher zum laufstreifenaußenseitigen Einschnittende 12c liegenden, laufstreifenaußenseitigen Ende dieses Schnittlinienabschnittes I₁'. Am laufstreifeninnenseitigen Ende des am weitesten laufstreifeninnenseitigen Schnittlinienabschnittes I₁' weist die Amplitude einen Amplitudenwert A₁ auf. Am laufstreifenaußenseitigen Ende des am weitesten laufstreifeninnenseitigen Schnittlinienabschnittes I₁' weist die Amplitude einen Amplitudenwert A₂ (A₂ < A₁) auf, welcher somit auch gleichzeitig am laufstreifenaußenseitigen Ende des nächsten Schnittlinienabschnittes I₁' vorliegt. Diese Amplitudenabnahme setzt sich über die weiteren Schnittlinienabschnitte I₁' fort, sodass die Amplitude beim Ausführungsbeispiel ausgehend vom laufstreifeninnenseitigen Ende des am weitesten laufstreifeninnenseitigen Schnittlinienabschnittes I₁' zum laufstreifenaußenseitigen Ende des am weitesten laufstreifenaußenseitigen Schnittlinienabschnittes I₁' folgende aufeinanderfolgende Amplitudenwerte aufweist: A₁ - A₂ - A₃ - A₄ - A₅ - A₆ - A₇ - A₈. Der Amplitudenwert A₁ beträgt 100% bis 500%, insbesondere 120% bis 300%, bevorzugt 150% bis 250%, der Breite b_{E} (Fig. 8) des Einschnittes 12. Für die weiteren Amplitudenwerte Aᵢ₊₁ gilt: Aᵢ₊₁ = Aᵢ * 0,60 bis Aᵢ * 0,95 (im Ausführungsbeispiel ist i = 1 bis 7). Beispielsweise beträgt daher der Amplitudenwert A₂ 60% bis 95% des Amplitudenwertes A₁ und der Amplitudenwert A₃ 60% bis 95% des Amplitudenwertes A₂.

Gemäß Fig. 8 weist der bereits erwähnte Kanal 13 einen kreisförmigen Querschnitt mit einem Durchmesser d_{K} von 200% bis 600%, insbesondere von 300% bis 500%, bevorzugt von 350% bis 450%, der Breite b_{E} des Einschnittes 12 auf und ist derart ausgebildet, dass der Einschnitt 12 über seine gesamte Erstreckung mittig in diesen einmündet (Fig. 6), sodass der Kanal 13 eine durch seine Mitte und parallel zur Einschnittmittellinie m_{E} (Fig. 6) verlaufende Kanalachse aufweist.

Die Erfindung ist auf das beschriebene Ausführungsbeispiel nicht beschränkt.

Der Kanal 13 ist optional. Der Laufstreifen kann auch drehrichtungsfrei (nicht laufrichtungsgebunden) ausgeführt sein.

Die Einschnitte 12 verlaufen zur axialen Richtung unter einem Winkel von 0° bis 50° und können in Draufsicht gerade, gebogen oder einen geschwungenen Verlauf aufweisen. Der Winkel bezieht sich bei in Draufsicht gerade verlaufenden Einschnitten 12 auf die Einschnittmittellinie, andernfalls auf eine die Enden der Einschnittmittellinie verbindende, in Draufsicht gerade verlaufende Linie. Die Einschnitte 12 befinden sich in zumindest einer seitlich der Reifenäquatorialebene ausgebildeten, in Umfangsrichtung umlaufenden Profilrippe (keine zentrale von der Reifenäquatorialebene halbierte Profilrippe). Die Einschnitte 12 können dabei jeweils unmittelbar von der Rippenaußenfläche 1a, jeweils von einem Boden einer in der Profilrippe ausgebildeten, zur Laufstreifenperipherie offenen, flachen Vertiefung mit einer in radialer Richtung ermittelten, auf ihre tiefste(n) Stelle(n) bezogenen Tiefe von 1,0 mm bis 10,0 mm, vorzugsweise von 2,0 mm bis 5,0 mm, oder von einem in einer Querrille befindlichen Profilrippensteg ausgehen, wobei die Einschnitte die Profilrippe bzw. die zu dieser gehörenden Profilrippenstege durchqueren. Die genannten Varianten können auch beliebig miteinander kombiniert werden. Die Einschnittzonen sind zumindest in einem über den Großteil des Einschnittes verlaufenden Abschnitt des Einschnittes vorgesehen. Die Form der Welle, welche in Erstreckungsrichtung des Einschnittes in der Einschnittzone vorliegt, kann variieren, sodass die Form der Welle, wie beschrieben, eine Zickzackwelle, alternativ eine Sägezahnwelle oder eine gerundete Welle, beispielsweise eine Sinuswelle, ist.

### Bezugszeichenliste

- 1: schulterseitige Profilrippe
- 1a: Rippenaußenfläche
- 2: schulterseitige Umfangsrille
- 3: schulterseitige Querrille
- 3a: zentraler Rillenhauptabschnitt
- 3b: Rillenmündungsabschnitt
- 3c: Rillenschulterabschnitt
- 4: Rippenelement
- 5a: einlaufende Kante
- 5b: auslaufende Kante
- 5c: Kante
- 6a: Fase
- 6c: Fase
- 7a: Fasenkante
- 7c: Fasenkante
- 8: Profilrippensteg
- 8a: Deckfläche
- 8b: laufstreifeninnenseitige Seitenflanke
- 8c: laufstreifenaußenseitige Seitenflanke
- 9b: Grund
- 9c: Grund
- 9d: Flanke
- 10: Übergangsrundung
- 11: Übergangsrundung
- 12: Einschnitt
- 12a: Einschnittwand
- 12b: laufstreifeninnenseitiges Einschnittende
- 12c: laufstreifenaußenseitiges Einschnittende
- 12^{I}: radial äußerer Einschnittabschnitt
- 12^{II}: mittlere Einschnittzone
- 12^{III}: radial innerer Einschnittabschnitt
- 13: Kanal
- 14: Vorsprung
- 15: Vertiefung
- a₁: Abstand
- A_{i, i = 1 bis 8}: Amplitudenwert
- b_{E}, b_{QR}: Breite
- d_{K}: Durchmesser
- f_{E}: Einschnittmittelfläche
- F₁: Symmetriefläche
- I: Linie
- I₁: Schnittlinie
- I₁': Schnittlinienabschnitt
- I_{b}: Wellenbasislinie
- I_{S}, I_{QR}, I^{I}, I^{II}, I^{III}: Länge
- m_{E}: Einschnittmittellinie
- N₇: Niveau
- R: Pfeil (Abrollrichtung)
- S₃, S₄: Pfeil (Sichtrichtung)
- tₐ, t_{E}, t_{f}, t_{F}: Tiefe
- T_{P}: Profiltiefe
- Z₂: Detail
- α: Winkel
- λ: Wellenlänge

## Patentansprüche

1. Nutzfahrzeugreifen mit einem Laufstreifen mit zumindest einer in Umfangsrichtung umlaufenden, seitlich der Reifenäquatorialebene angeordneten Profilrippe (1) mit durchquerenden Einschnitten (12), welche jeweils Einschnittwände (12a), eine zu den Einschnittwänden (12a) übereinstimmend beabstandete Einschnittmittelfläche (f_{E}), eine Breite (b_{E}) von 0,4 mm bis 2,0 mm und in radialer Richtung eine maximale Tiefe (t_{E}) von zumindest 40% der Profiltiefe (T_{P}) aufweisen, wobei jeder Einschnitt (12) zumindest in einem in Draufsicht über seinen Großteil verlaufenden Abschnitt zumindest eine gegenüber der radial äußeren Einschnittperipherie abgesetzte, in Erstreckungsrichtung des Einschnittes (12) in einer Wellenform und in radialer Richtung bogenförmig oder einzackig verlaufende Einschnittzone (12^{II}) aufweist, wobei eine durch die Stelle der maximalen Auslenkung der Einschnittzone (12^{II}) verlaufende Fläche (F₁) mit der Einschnittmittelfläche (f_{E}) eine der Wellenform der Einschnittzone (12^{II}) folgende Schnittlinie (I₁) aufweist,
**dadurch gekennzeichnet,**
**dass** der Einschnitt (12) ausschließlich in der Einschnittzone (12^{II}) in der Wellenform verläuft, wobei die Amplitude der der Wellenform der Einschnittzone (12^{II}) folgenden Schnittlinie (I) in jedem über eine halbe Wellenlänge (λ/2) verlaufenden Schnittlinienabschnitt (I₁') in Richtung laufstreifenaußenseitiges Einschnittende (12c) abnimmt.

2. Nutzfahrzeugreifen nach Anspruch 1, **dadurch gekennzeichnet, dass** die Amplitude am laufstreifeninnenseitigen Ende jedes Schnittlinienabschnittes (I₁') einen ersten Amplitudenwert (Aᵢ) und am laufstreifenaußenseitigen Ende jedes Schnittlinienabschnittes (I₁') einen zweiten Amplitudenwert (Aᵢ₊₁) aufweist, wobei jeder zweite Amplitudenwert (Aᵢ₊₁) das 0,60-Fache bis 0,95-Fache des zugehörigen ersten Amplitudenwertes (Aᵢ) beträgt.

3. Nutzfahrzeugreifen nach Anspruch 1 oder 2, **dadurch gekennzeichnet, dass** die Amplitude (A₁) am laufstreifeninnenseitigen Ende des am weitesten laufstreifeninnenseitigen Schnittlinienabschnittes (I₁') einen Amplitudenwert (A₁) von 100% bis 500%, insbesondere von 120% bis 300%, bevorzugt von 150% bis 250%, der Breite (b_{E}) des Einschnittes (12) aufweist.

4. Nutzfahrzeugreifen nach einem der Ansprüche 1 bis 3, **dadurch gekennzeichnet, dass** die der Wellenform der Einschnittzone (12^{II}) folgende Schnittlinie (I₁) über drei bis sechs, vorzugsweise über bis zu fünf, insbesondere über vier, Wellenlängen (λ) verläuft.

5. Nutzfahrzeugreifen nach Anspruch 4, **dadurch gekennzeichnet, dass** die Wellenlängen (λ) übereinstimmende Größen aufweisen.

6. Nutzfahrzeugreifen nach einem der Ansprüche 1 bis 5, **dadurch gekennzeichnet, dass** die Fläche (F₁), welche durch die Stelle der maximalen Auslenkung der Einschnittzone (12^{II}) verläuft, parallel zur Rippenaußenfläche (1a) der Profilrippe (1) verläuft.

7. Nutzfahrzeugreifen nach einem der Ansprüche 1 bis 6, **dadurch gekennzeichnet, dass** die Fläche (F₁), welche durch die Stelle der maximalen Auslenkung der Einschnittzone (12^{II}) verläuft, eine Symmetriefläche (F₁) der Einschnittzone (12^{II}) ist.

8. Nutzfahrzeugreifen nach einem der Ansprüche 1 bis 7, **dadurch gekennzeichnet, dass** die Fläche (F₁), welche durch die Stelle der maximalen Auslenkung der Einschnittzone (12^{II}) verläuft, zumindest über den Großteil ihrer Erstreckung in einer in radialer Richtung ermittelten konstanten Tiefe (t_{F}) von 45% bis 65%, insbesondere von 50% bis 60%, der maximalen Tiefe (t_{E}) des Einschnittes (12) verläuft.

9. Nutzfahrzeugreifen nach einem der Ansprüche 1 bis 8, **dadurch gekennzeichnet, dass** die der Wellenform der Einschnittzone (12^{II}) folgende Schnittlinie (I₁) in Form einer Zickzackwelle verläuft.

10. Nutzfahrzeugreifen nach einem der Ansprüche 1 bis 9, **dadurch gekennzeichnet, dass** die Einschnittzone (12^{II}), im Querschnitt des Einschnittes (12) betrachtet, eine auf die Einschnittmittelfläche (f_{E}) bezogene, in radialer Richtung ermittelte Länge (I^{II}) von 30% bis 90%, insbesondere von 35% bis 80%, der maximalen Tiefe (t_{E}) des Einschnittes (12) aufweist.

11. Nutzfahrzeugreifen nach einem der Ansprüche 1 bis 10, **dadurch gekennzeichnet, dass** der Einschnitt (12) einen zwischen der Einschnittzone (12^{II}) und der Einschnittperipherie sowie im Querschnitt des Einschnittes (12) gerade verlaufenden, radial äußeren Einschnittabschnitt (12^{I}) mit einer auf die Einschnittmittelfläche (f_{E}) bezogenen Länge (I^{I}) von vorzugsweise 0,5 mm bis 1,5 mm aufweist.

12. Nutzfahrzeugreifen nach einem der Ansprüche 1 bis 11, **dadurch gekennzeichnet, dass** der Einschnitt (12) einen an die Einschnittzone (12^{II}) anschließenden, im Querschnitt des Einschnittes (12) gerade verlaufenden, radial inneren Einschnittabschnitt (12^{III}) mit einer auf die Einschnittmittelfläche (f_{E}) bezogenen Länge (I^{III}) von vorzugsweise 0,5 mm bis 1,5 mm aufweist.

13. Nutzfahrzeugreifen nach einem der Ansprüche 1 bis 12, **dadurch gekennzeichnet, dass** zu den Einschnitten (12) Einschnitte (12) gehören,
a) welche von der Rippenaußenfläche (1a) der Profilrippe (1) ausgehen und/oder
b) welche sich jeweils in einem zur Profilrippe (1) gehörenden Profilrippensteg (8) befinden, der in einer die Profilrippe (1) durchquerenden Querrille (3) ausgebildet ist, wobei sich der Profilrippensteg (8) über den Großteil der Querrille (3) erstreckt und eine Deckfläche (8a) aufweist, welche vorzugsweise gegenüber der Rippenaußenfläche (1a) der Profilrippe (1) in einer in radialer Richtung auf ihre tiefste(n) Stelle(n) bezogene Tiefe (tₐ) von 1,0 mm bis 10,0 mm, insbesondere von 2,0 mm bis 5,0 mm, verläuft und/oder
c) welche jeweils vom Boden einer Vertiefung, welche die Profilrippe (1) durchquert, ausgehen, wobei die Vertiefung gegenüber der Rippenaußenfläche (1a) der Profilrippe (1) in radialer Richtung eine Tiefe von 1,0 mm bis 10,0 mm, insbesondere von 2,0 mm bis 5,0 mm, aufweist.

14. Nutzfahrzeugreifen nach einem der Ansprüche 1 bis 13, **dadurch gekennzeichnet, dass** Einschnitte (12) vorgesehen sind, welche über ihre gesamte Erstreckung jeweils in einen im Inneren der Profilrippe (1) ausgebildeten Kanal (13) mit einem Durchmesser (d_{K}) von 200% bis 600%, insbesondere von 300% bis 500%, bevorzugt von 350% bis 450%, der Breite (b_{E}) des Einschnittes (12) einmünden.

15. Nutzfahrzeugreifen nach einem der Ansprüche 1 bis 14, **dadurch gekennzeichnet, dass** die Profilrippe (1) eine schulterseitige Profilrippe (1) ist.

## Claims

1. Commercial vehicle tire having a tread with at least one profile rib (1) which runs in encircling fashion in a circumferential direction, is arranged laterally with respect to the tire equatorial plane and has sipes (12) extending through it, which sipes each have sipe walls (12a), a sipe midplane (f_{E}) spaced apart equally from the sipe walls (12a), a width (b_{E}) of 0.4 mm to 2.0 mm and a maximum depth (t_{E}) in a radial direction of at least 40% of the profile depth (T_{P}), wherein each sipe (12), at least in a portion which runs over the predominant part thereof as seen in plan view, has at least one sipe zone (12^{II}) which is offset in relation to the radially outer sipe periphery and which runs in an extent direction of the sipe (12) in an undulating form and in arcuate or singly serrated form in a radial direction, wherein a plane (F₁) running through the point of the maximum excursion of the sipe zone (12^{II}) has a line of intersection (I₁) with the sipe midplane (f_{E}), which line of intersection follows the undulating form of the sipe zone (12^{II}),
**characterized in that**
the sipe (12) runs in the undulating form exclusively in the sipe zone (12^{II}), wherein the amplitude of the line of intersection (I) that follows the undulating form of the sipe zone (12^{II}) decreases, in each line-of-intersection portion (I₁') running over one half of a wavelength (λ/2), in the direction of the tread-outside sipe end (12c).

2. Commercial vehicle tire according to Claim 1, **characterized in that** the amplitude has a first amplitude value (Aᵢ) at the tread-inside end of each line-of-intersection portion (I₁') and has a second amplitude value (Aᵢ₊₁) at the tread-outside end of each line-of-intersection portion (II₁'), wherein each second amplitude value (Aᵢ₊₁) is 0.60 times to 0.95 times the associated first amplitude value (Aᵢ).

3. Commercial vehicle tire according to Claim 1 or 2, **characterized in that** the amplitude (A₁) at the tread-inside end of that line-of-intersection portion (I₁') which is furthest to the inside of the tread has an amplitude value (A₁) of 100% to 500%, in particular of 120% to 300%, preferably of 150% to 250%, of the width (b_{E}) of the sipe (12).

4. Commercial vehicle tire according to any one of Claims 1 to 3, **characterized in that** the line of intersection (I₁) that follows the undulating form of sipe zone (12^{II}) runs over three to six, preferably over up to five, in particular over four, wavelengths (λ).

5. Commercial vehicle tire according to Claim 4, **characterized in that** the wavelengths (λ) are of equal size.

6. Commercial vehicle tire according to any one of Claims 1 to 5, **characterized in that** the plane (F₁) that runs through the point of the maximum excursion of the sipe zone (12^{II}) runs parallel to the rib outer surface (1a) of the profile rib (1).

7. Commercial vehicle tire according to any one of Claims 1 to 6, **characterized in that** the plane (F₁) that runs through the point of the maximum excursion of the sipe zone (12^{II}) is a plane of symmetry (F₁) of the sipe zone (12^{II}).

8. Commercial vehicle tire according to any one of Claims 1 to 7, **characterized in that** the plane (F₁) that runs through the point of the maximum excursion of the sipe zone (12^{II}) runs, at least over the predominant part of its extent, at a constant depth (t_{F}), measured in a radial direction, of 45% to 65%, in particular of 50% to 60%, of the maximum depth (t_{E}) of the sipe (12).

9. Commercial vehicle tire according to any one of Claims 1 to 8, **characterized in that** the line of intersection (I₁) that follows the undulating form of the sipe zone (12^{II}) runs in the form of a zigzag-shaped undulation.

10. Commercial vehicle tire according to any one of Claims 1 to 9, **characterized in that**, as viewed in a cross section of the sipe (12), the sipe zone (12^{II}) has a length (I^{II}), based on the sipe midplane (f_{E}) and measured in a radial direction, of 30% to 90%, in particular of 35% to 80%, of the maximum depth (t_{E}) of the sipe (12).

11. Commercial vehicle tire according to any one of Claims 1 to 10, **characterized in that** the sipe (12) has a radially outer sipe portion (12^{I}) which runs in a straight manner between the sipe zone (12^{II}) and the sipe periphery and in the cross section of the sipe (12) and which has a length (I^{I}), based on the sipe midplane (f_{E}), of preferably 0.5 mm to 1.5 mm.

12. Commercial vehicle tire according to any one of Claims 1 to 11, **characterized in that** the sipe (12) has a radially inner sipe portion (12^{III}) which adjoins the sipe zone (12^{II}) and which runs in a straight manner in the cross section of the sipe (12) and which has a length (I^{III}), based on the sipe midplane (f_{E}), of preferably 0.5 mm to 1.5 mm.

13. Commercial vehicle tire according to any one of Claims 1 to 12, **characterized in that** the sipes (12) include sipes (12)
a) which proceed from the rib outer surface (1a) of the profile rib (1) and/or
b) which are each situated in a profile rib web (8) which belongs to the profile rib (1) and which is formed in a transverse channel (3) extending through the profile rib (1), wherein the profile rib web (8) extends over the predominant part of the transverse channel (3) and has a top surface (8a) which, in relation to the rib outer surface (1a) of the profile rib (1), preferably runs at a depth (tₐ), measured at the lowest point(s) of said top surface in a radial direction, of 1.0 mm to 10.0 mm, in particular of 2.0 mm to 5.0 mm, and/or
c) which each proceed from the base of a depression extending through the profile rib (1), wherein the depression has a depth of 1.0 mm to 10.0 mm, in particular of 2.0 mm to 5.0 mm, in a radial direction in relation to the rib outer surface (1a) of the profile rib (1).

14. Commercial vehicle tire according to any one of Claims 1 to 13, **characterized in that** sipes (12) are provided which each, over their entire extent, open into a channel (13) which is formed in the interior of the profile rib (1) and which has a diameter (d_{K}) of 200% to 600%, in particular of 300% to 500%, preferably of 350% to 450%, of the width (b_{E}) of the sipe (12).

15. Commercial vehicle tire according to any one of Claims 1 to 14, **characterized in that** the profile rib (1) is a shoulder-side profile rib (1).

## Revendications

1. Pneu de véhicule utilitaire avec une bande de roulement avec au moins une nervure de profil (1) s'étendant dans la direction circonférentielle, agencée latéralement par rapport au plan équatorial du pneu, avec des entailles transversales (12) qui présentent chacune des parois d'entaille (12a) une surface centrale d'entaille (f_{E}) espacée de manière concordante par rapport aux parois d'entaille (12a), une largeur (b_{E}) de 0,4 mm à 2,0 mm et, dans la direction radiale, une profondeur maximale (t_{E}) d'au moins 40 % de la profondeur de profil (T_{P}), chaque entaille présentant (12) présentant, au moins dans une section s'étendant sur sa majeure partie en vue de dessus, au moins une zone d'entaille (12^{II}) décalée par rapport à la périphérie d'entaille radialement extérieure, s'étendant dans la direction d'extension de l'entaille (12) sous une forme ondulée et dans la direction radiale sous forme arquée ou dentelée, une surface (F₁) passant par le point de déviation maximale de la zone d'entaille (12^{II}) présentant avec la surface centrale d'entaille (f_{E}) une ligne d'intersection (I₁) qui suit la forme ondulée de la zone d'entaille (12^{II}),
**caractérisé en ce que**
l'entaille (12) s'étend exclusivement dans la zone d'entaille (12^{II}) de la forme ondulée, l'amplitude de la ligne d'intersection (I) suivant la forme ondulée de la zone d'entaille (12^{II}) diminuant dans chaque section de ligne d'intersection (I₁') s'étendant sur une demi-longueur d'onde (λ/2) en direction de l'extrémité d'entaille (12c) située à l'extérieur de la bande de roulement.

2. Pneu de véhicule utilitaire selon la revendication 1, **caractérisé en ce que** l'amplitude à l'extrémité côté intérieur de la bande de roulement de chaque section de ligne d'intersection (I₁') présente une première valeur d'amplitude (Aᵢ) et à l'extrémité côté extérieur de la bande de roulement de chaque section de ligne d'intersection (I₁') une deuxième valeur d'amplitude (Aᵢ₊₁), chaque deuxième valeur d'amplitude (Aᵢ₊₁) étant de 0,60 fois à 0,95 fois la première valeur d'amplitude correspondante (Aᵢ).

3. Pneu de véhicule utilitaire selon la revendication 1 ou 2, **caractérisé en ce que** l'amplitude (A₁) à l'extrémité côté intérieur de la bande de roulement de la section de ligne d'intersection (I₁') la plus intérieure de la bande de roulement présente une valeur d'amplitude (A₁) de 100 % à 500 %, notamment de 120 % à 300 %, de préférence de 150 % à 250 %, de la largeur (b_{E}) de l'entaille (12).

4. Pneu de véhicule utilitaire selon l'une quelconque des revendications 1 à 3, **caractérisé en ce que** la ligne d'intersection (I₁) qui suit la forme ondulée de la zone d'entaille (12^{II}) s'étend sur trois à six, de préférence jusqu'à cinq, notamment sur quatre longueurs d'onde (λ).

5. Pneu de véhicule utilitaire selon la revendication 4, **caractérisé en ce que** les longueurs d'onde (λ) présentent des valeurs concordantes.

6. Pneu de véhicule utilitaire selon l'une quelconque des revendications 1 à 5, **caractérisé en ce que** la surface (F₁) qui passe par le point de déviation maximale de la zone d'entaille (12^{II}) est parallèle à la surface extérieure de nervure (1a) de la nervure de profil (1).

7. Pneu de véhicule utilitaire selon l'une quelconque des revendications 1 à 6, **caractérisé en ce que** la surface (F₁) qui passe par le point de déviation maximale de la zone d'entaille (12^{II}) est une surface de symétrie (F₁) de la zone d'entaille (12^{II}).

8. Pneu de véhicule utilitaire selon l'une quelconque des revendications 1 à 7, **caractérisé en ce que** la surface (F₁) qui passe par le point de déviation maximale de la zone d'entaille (12^{II}), s'étend, au moins sur la majeure partie de son extension, à une profondeur constante (t_{F}) déterminée dans la direction radiale de 45 % à 65 %, notamment de 50 % à 60 %, de la profondeur maximale (t_{E}) de l'entaille (12).

9. Pneu de véhicule utilitaire selon l'une quelconque des revendications 1 à 8, **caractérisé en ce que** la ligne d'intersection (I₁) qui suit la forme ondulée de la zone d'entaille (12^{II}) se présente sous la forme d'une onde en zigzag.

10. Pneu de véhicule utilitaire selon l'une quelconque des revendications 1 à 9, **caractérisé en ce que** la zone d'entaille (12^{II}), considérée dans la section transversale de l'entaille (12), présente une longueur (I^{II}) déterminée dans la direction radiale, rapportée à la surface centrale d'entaille (f_{E}), de 30 % à 90 %, notamment de 35 % à 80 %, de la profondeur maximale (t_{E}) de l'entaille (12).

11. Pneu de véhicule utilitaire selon l'une quelconque des revendications 1 à 10, **caractérisé en ce que** l'entaille (12) présente une section d'entaille radialement extérieure (12^{I}), qui s'étend de manière rectiligne entre la zone d'entaille (12^{II}) et la périphérie d'entaille, ainsi que dans la section transversale de l'entaille (12), avec une longueur (I^{I}) par rapport à la surface centrale d'entaille (f_{E}) de préférence de 0,5 mm à 1,5 mm.

12. Pneu de véhicule utilitaire selon l'une quelconque des revendications 1 à 11, **caractérisé en ce que** l'entaille (12) comprend une section d'entaille radiale intérieure (12^{III}), qui se raccorde à la zone d'entaille (12^{II}), s'étendant de manière rectiligne dans la section transversale de l'entaille (12), avec une longueur (I^{III}) par rapport à la surface centrale d'entaille (f_{E}) de préférence de 0,5 mm à 1,5 mm.

13. Pneu de véhicule utilitaire selon l'une quelconque des revendications 1 à 12, **caractérisé en ce que** les entailles (12) comprennent des entailles (12)
a) qui partent de la surface extérieure de nervure (1a) de la nervure de profil (1) et/ou
b) qui se trouvent respectivement dans une entretoise de nervure de profil (8) appartenant à la nervure de profil (1), laquelle est réalisée dans une rainure transversale (3) traversant la nervure de profil (1), l'entretoise de nervure de profil (8) s'étendant sur la majeure partie de la rainure transversale (3) et présentant une surface de recouvrement (8a), qui s'étend de préférence, par rapport à la surface extérieure de nervure (1a) de la nervure de profil (1) à une profondeur (tₐ) de 1,0 mm à 10,0 mm, notamment de 2,0 mm à 5,0 mm, par rapport à son ou ses points les plus profonds dans la direction radiale, et/ou
c) qui partent respectivement du fond d'un renfoncement traversé par la nervure de profil (1), le renfoncement présentant, par rapport à la surface extérieure de nervure (1a) de la nervure de profil (1), une profondeur de 1,0 mm à 10,0 mm, notamment de 2,0 mm à 5,0 mm, dans la direction radiale.

14. Pneu de véhicule utilitaire selon l'une quelconque des revendications 1 à 13, **caractérisé en ce que** des entailles (12) sont prévues, qui débouchent sur toute leur extension dans un canal (13) réalisé à l'intérieur de la nervure de profil (1) avec un diamètre (dₖ) de 200 % à 600 %, notamment de 300 % à 500 %, de préférence de 350 % à 450 %, de la largeur (b_{E}) de l'entaille (12).

15. Pneu de véhicule utilitaire selon l'une quelconque des revendications 1 à 14, **caractérisé en ce que** la nervure de profil (1) est une nervure de profil (1) côté épaulement.
